(19) Europäisches Patentamt
European Patent Office
Office européen des brevets

(11) Publication number: **0 419 737 A2**

(12) # EUROPEAN PATENT APPLICATION

(21) Application number: **89309759.2**

(51) Int. Cl.5: **B29C 45/00**, //B29K63:00

(22) Date of filing: **26.09.89**

(30) Priority: **27.09.89 JP 243072/88**

(43) Date of publication of application: **03.04.91 Bulletin 91/14**

(84) Designated Contracting States: **DE FR GB**

(71) Applicant: **SOMAR CORPORATION**
**11-2, Ginza 4-chome Chuo-ku**
**Tokyo 104(JP)**

(72) Inventor: **Nakamura, Atsumi**
**3-29, Tsukushino 2-chome Abiko-shi**
**Chiba-ken(JP)**
Inventor: **Kajikawa, Mamoru**
**11-20, Kotobuki 1-chome Okegawa-shi**
**Saitama-ken(JP)**
Inventor: **Akutagawa, Ichiro**
**198, Edogawadai-higashi 3-chome**
**Nagareyama-shi Chiba-ken(JP)**

(74) Representative: **Allam, Peter Clerk et al**
**LLOYD WISE, TREGEAR & CO. Norman House 105-109 Strand**
**London WC2R 0AE(GB)**

(54) **Molding method.**

(57) A molding method is disclosed which includes the steps of:
(a) providing an epoxy resin composition having a gellation time at 80 °C ($T_{80}$) of at least 60 minutes and a gellation time at 150 °C ($T_{150}$) of not greater than $0.02T_{80}$;
(b) charging the epoxy resin composition in a cylinder provided with an injection nozzle while maintaining the charged epoxy resin composition at a temperature from room temperature to 70 °C,
(c) injecting the epoxy resin composition contained in the cylinder into a mold cavity through the nozzle while maintaining the mold at a temperature of 100 °C or more; and
(d) curing the epoxy resin within the mold cavity.

EP 0 419 737 A2

# MOLDING METHOD

This invention relates to a method of molding an epoxy resin composition.

Japanese published unexamined patent application (Tokkyo Kokai) No. 60-119,734 proposes a method of encapsulating an electric part with an epoxy resin by injection molding. Since, however, an epoxy resin is apt to become viscous at room temperature within a relatively short period of time and since it is difficult to control the molding pressure, injection molding has not been generally industrially adopted.

The present invention has been made with the above problem of the conventional method in view. In accordance with the present invention there is provided a molding method comprising the steps of:

a) providing an epoxy resin composition having a gellation time at 80 °C ($T_{80}$) of at least 60 minutes and a gellation time at 150 °C ($T_{150}$) of not greater than $0.02T_{80}$;

b) charging the epoxy resin composition in a cylinder provided with an injection nozzle while maintaining the charged epoxy resin composition at a temperature from room temperature to 70 °C,

c) injecting the epoxy resin composition contained in said cylinder into a mold cavity through said nozzle while maintaining said mold at a temperature of 100 °C or more; and

d) curing the epoxy resin within said mold cavity.

The present invention will now be described in detail below.

In the molding method according to the present invention, a thermosetting epoxy resin composition is charged in a cylinder maintained at a temperature in the range of from room temperature to 70 °C and is injected through a nozzle connected to the cylinder into a mold cavity maintained at a temperature of 100 °C or more, preferably 130-180 °C.

It is important that the epoxy resin composition to be subjected to injection molding should exhibit specific gellation time characteristics in order to smoothly perform the molding. Thus, the gellation time at 80 °C ($T_{80}$) of the epoxy resin composition must be at least 60 minutes, preferably at least 70 minutes and the gellation time at 150 °C ($T_{150}$) must be not greater than $0.02T_{80}$, preferably not greater than $0.01T_{80}$.

The term "gellation time" used in the present specification and appended claims is intended to refer to that measured in accordance with Japanese Industrial Standard JIS C 2105. Briefly, in this test method, a test sample (0.4 cc) is placed on a hot plate maintained at 150 °C. The period of time required for the sample to gel represents the gellation time thereof.

An epoxy resin composition having the above specific property can keep its suitable moldability even when the composition is held within the cylinder for a long time. It is preferred that the epoxy resin composition have a viscosity at the cylinder temperature (from room temperature to 70 °C) of 5,000,000 Cp or less, more preferably 500,000 Cp or less, since such a resin composition permits injection through the nozzle at a low injection pressure of 50 $kg/cm^2$. It is also preferred that the period of time required for the viscosity of the epoxy resin composition to become doubled be more than 7 days when stored at 25 °C and more than 24 hours when stored at 40 °C.

In order to obtain a molded article having improved mechanical strength, thermal resistance and electrical insulation, it is desired to incorporate a filler into the epoxy resin composition in a large amount. In this case, the viscosity of the composition becomes high. Thus, it becomes necessary to heat the composition in order to lower the viscosity. However, the heating of the composition causes a problem of gellation. By the use of the epoxy resin composition having the above-mentioned specific property and by carrying out the injection molding under the above-described conditions, the above problem can be solved and the molding can be effected smoothly with a low injection pressure.

A thermosetting epoxy resin composition suitable for use in the method of the present invention includes an epoxy resin and a curing agent. The epoxy resin is suitably a liquid epoxy resin having two or more epoxy groups in its molecule and preferably has a viscosity at 25 °C of 20,000 Cp or less, more preferably 15,000 Cp or less. Examples of suitable epoxy resins include glycidyl ethers of bisphenol A, bisphenol F, bisphenol AD, brominated bisphenol A, glycerin and polyalkylene oxide; glycidyl esters of dimer acid and isophthalic acid; epoxidized polybutadiene obtained by reaction of polybutadiene with peracetic acid; and mixtures thereof. Above all, the use of glycidyl ethers of bisphenol A, bisphenol F and bisphenol AD is particularly preferred.

The epoxy resin may be used in conjunction with an epoxy compound capable of lowering the viscosity of the resin composition. Further, a crystalline or solid epoxy resin may be added to the composition as long as it can be dissolved in the liquid epoxy resin. Examples of such solid epoxy resins include glycidyl ethers of resorcin and hydroquinone.

The curing agent to be used in the present invention is a latent curing agent which does not react with the mixed epoxy resin at room temperature but can react therewith at a temperature of 60 °C or more,

preferably 100 °C or more. Thus, a nitrogen-containing curing agent such as dicyanodiamide, a guanamine (e.g. acetoguanamine or benzoguanamine), a hydrazide (e.g. adipodihydrazide, stearodihydrazide, isophthalodihydrazide or sebacohydrazide), a triazine compound (e.g. 2,4-dihydrazide-6-methylamino-S-triazine) or an imidazole or its derivative is preferably used in the present invention. Above all, the use of a hydrazide or dicyanodiamide is particularly preferred.

It is preferred that a curing accelerator be used in conjunction with the above curing agent. Such a promoter may be, for example, (1) a urea compound such as 3-substituted-1,1-dimethylureas, (2) a solid solution of 1,8-diazabicyclo(5,4,0)undecene-7 and a phenol novolak and (3) an amine adduct obtained by reacting a compound having at least two epoxy groups with a compound having both a hydroxyl group and a tertiary amino group and with an organic compound (except those having an epoxy group or a tertiary amino group) having at least two active hydrogen atoms.

Examples of suitable urea compounds are 3-(3,4- dichlorophenyl)-1,1-dimethylurea, 3-(p-chlorophenyl)-1,1-dimethylurea, 3-phenyl-1,1-dimethylurea, N,N′-(4-methyl-1,3-phenylene)-bis(N,N′-dimethylurea) and 5-(N,N′-dimethylureido)-1-(N″,N″-dimethylureidomethyl)-1,3,3-trimethylcyclohexane.

The solid solution may be obtained by heating a mixture of 1,8-diaza-bicyclo(5,4,0)undecene-7 with a phenol novolak for reaction therebetween, cooling the reaction product, and pulverizing the cooled solids. The phenol novolak is a condensation product obtained by reacting a phenol derivative with an aldehyde. Examples of the phenol derivatives include phenol, alkylphenols, alkoxyphenols, halogenated phenols, resorcinol and bisphenol A. Of these, phenol, p-tert-butylphenol and bisphenol A are particularly preferred. Examples of the aldehyde include furfuraldehyde, chloral, acetoaldehyde or formaldehyde. The content of the undecene-7 in the solid solution is preferably 10-50 % by weight.

Examples of the amine adducts include polyaddition reaction products obtained from (i) 2,3-bis[4-(2,3-epoxypropoxy)phenyl]propane, 1,3-bis{4-[4-(2,3-epoxypropoxy)-α,α-dimethylbenzyl]phenoxy}-2-propanol, (ii) condensation products obtained from phenol, formaldehyde and dimethylamine, (iii) adducts of 2-alkyl-(with 1-3 carbon atoms)imidazole or 2-alkyl(with 1-3 carbon atoms)-4-methylimidazole and 2,3-epoxypropyl phenyl ether and (iv) piperazine.

The amount of the curing agent is preferably 0.03-0.25 mole per one equivalent of the epoxy group of the epoxy resin. An amount of the curing agent below 0.03 mole per 1 equivalent of the epoxy groups of the epoxy resin causes lowering of the glass transition point and resistance to moisture of the cured body, and reduction of the curing rate. When the curing agent is used in excess of 0.25 mole, the preservability of the epoxy resin composition becomes poor and the cured body obtained therefrom is low in glass transition point and in resistance to moisture. The amount of the curing accelerator is preferably 1-30 parts by weight per 100 parts by weight of the epoxy resin. An amount of the curing accelerator below 1 % by weight causes reduction of the curing rate of the composition. No merits are available by the use of the curing accelerator in excess of 30 % by weight. Rather, the composition becomes unstable.

An inorganic filler is preferably incorporated into the thermosetting epoxy resin composition of the present invention. Illustrative of the inorganic fillers are silica, alumina, titania, calcium carbonate, talc, clay, calcium silicate, mica, glass fibers, glass powder, glass flakes and whiskers of various kinds. The amount of the inorganic filler is 30-80 %, preferably 40-75 % based on the weight of the composition. The inorganic filler preferably has an average particle size of 5-50 µm.

In the present invention a thixotropic agent having an average particle size of 100 nm or less is preferably used. Examples of such a thixotropic agent include 5 super-fine silica and alumina, aluminum hydroxide, fibrous magnesium oxysulfate, powdery asbesto, fibrous silica, fibrous potassium titanate, scale-like mica, and a montmorillonite-organic salt composite so called bentonite. The thixotropic agent is used in an amount of 0.1-30 parts by weight, preferably 0.5-15 parts by weight per 100 parts by weight of the epoxy resin.

The above inorganic filler and/or the thixotropic agent are preferably pretreated with a siloxane compound. The use of the filler and thixotropic agent generally adversely affect the stability of the composition, especially when charged in a cylinder of an injection molding device. When the filler and thixotropic agent are treated with a siloxane compound, however, the stability becomes improved. Illustrative of suitable siloxane compounds are as follows:

$$R-\underset{R}{\overset{R}{\underset{|}{\overset{|}{Si}}}}-O\left(\underset{R}{\overset{R}{\underset{|}{\overset{|}{Si}}}}-O\right)_m\underset{R}{\overset{R}{\underset{|}{\overset{|}{Si}}}}-R$$

wherein R stands for a hydrocarbyl group such as methyl, ethyl, propyl, vinyl or phenyl and m is a positive integer;

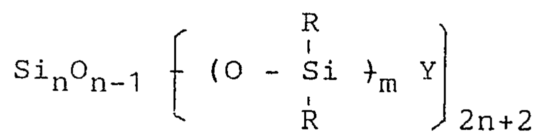

wherein R and m are as defined above and Y is hydrogen, $-OR^1$, $-R^2-CH-CH_2$, $-R^2-NH_2$, $-R^2-COOH$, $-R^2-OH$ where $R^1$ stands for a monovalent hydrocarbyl group, $R^2$ stands for a divalent hydrocarbyl group, and n is a positive integer (The hydrocarbyl group may be an aliphatic, alicyclic or aromatic);

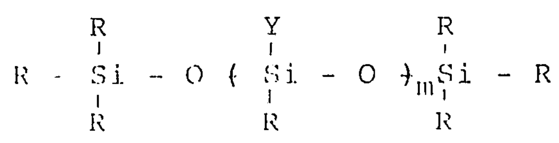

wherein R, Y and m are as defined above;

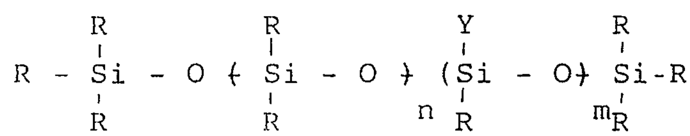

wherein R, Y, m and n are as defined above. The treatment of the filler and the thixotropic agent with the siloxane compound may be performed by mixing the filler or the thixotropic agent with a solution of the siloxane compound and, then, heating the mixture for oxidation of the siloxane compound.

The composition according to the present invention may further contain, as desired, a silane coupling agent, a mold releasing agent, a flame retarder, a flame retarding aid, a sedimentation-preventing agent, a dispersing agent or a pigment. The silane coupling agent, which may be, for example, an epoxy silane or aminosilane, serves to improve mechanical strength and electric insulating property of the cured body. The mold releasing agent may be, for example, montan wax or its modified product, carbana wax, a paraffin compound, a higher fatty acid or its ester or salt and may be used in an amount of 0.1-5 % by weight, preferably 0.5-3 % by weight based on the weight of the liquid epoxy resin.

In the method according to the present invention, the thermosetting epoxy resin composition charged in an injection cylinder is prevented from gelling or becoming viscous for a long period of time and can be smoothly injected through a nozzle into a heated mold with a low injection pressure. Thus, the method is particularly suited for encapsulating or packaging an electric part without causing any damage thereon. The encapsulation may be performed by injecting the resin composition into a mold cavity in which an electric part has been placed in position.

The following examples will further illustrate the present invention, wherein "part" is by weight.

Example 1

A liquid epoxy resin composition containing 100 parts of a mixture of glycidyl ethers of bisphenol A and bisphenol F (Epototo ZX-1059, manufactured by Toto Kasei Inc.), 13 parts of a curing agent (adipohydrazide) 3 parts of a curing accelerator (amine adduct PN-23, manufactured by Ajinomoto Inc.), 200 parts of an inorganic filler (crystalline silica, Crystalite C, manufactured by Tatsumori Inc), 1.5 parts of a mold releasing agent (carbana wax, manufactured by Nikko Fine Products, Inc.) and 1.5 parts of a coupling agent (NUC silane coupling agent A-186, manufactured by Nihon Uniker Inc.) was prepared. This composition had a viscosity of about 210,000 Cp at 25 °C and 21,000 at 50 °C and a gellation time of 12,600 seconds at 80 °C and 57 seconds at 150 °C. The epoxy resin composition was charged in an injection cylinder maintained at 40 °C and injected through a nozzle into a mold cavity. The injection molding was able to be performed even after the epoxy resin charge had been allowed to stand for more than 10 days.

Example 2

Example 1 was repeated in the same manner as described except that, as the curing accelerator, 5 parts of a solid solution of 1,8-diaza-bicyclo(5,4,0)undecene-7 and phenol novolak (U-CAT SA-841, manufactured by Sanapro Inc.) were used. The resulting composition had a viscosity of about 369,000 Cp at 25 °C and 38,000 at 50 °C and a gellation time of 21,600 seconds at 80 °C and 55 seconds at 150 °C. The epoxy resin composition was charged in an injection cylinder maintained at 40 °C and injected through a nozzle into a mold cavity. The injection molding was able to be performed even after the epoxy resin charge had been allowed to stand for more than 4 days.

Example 3

Example 1 was repeated in the same manner as described except that, as the curing accelerator, 7 parts of 3-(3,4-dichlorophenyl)-1,1-dimethylurea (DCMU, manufactured by Hodogaya Kagaku Kogyo K. K.) were used. The resulting composition had a viscosity of about 421,000 Cp at 25 °C and 39,000 at 50 °C and a gellation time of 9,600 seconds at 80 °C and 112 seconds at 150 °C. The epoxy resin composition was charged in an injection cylinder maintained at 40 °C and injected through a nozzle into a mold cavity. The injection molding was able to be performed even after the epoxy resin charge had been allowed to stand for more than 4 days.

Example 4

Example 1 was repeated in the same manner as described except that the curing accelerator was used in an amount of 5 parts. The resulting composition had a viscosity of about 256,000 Cp at 25 °C and 24,000 at 50 °C and a gellation time of 6,000 seconds at 80 °C and 26 seconds at 150 °C. The epoxy resin composition was charged in an injection cylinder maintained at 50 °C and injected through a nozzle into a mold cavity. The injection molding was able to be performed even after the epoxy resin charge had been allowed to stand for more than 3 days.

Example 5

A liquid epoxy resin composition containing 100 parts of a glycidyl ethers of bisphenol AD (Epomic R-710, manufactured by Mitsui Petroleum Chemicals, Inc.), 16 parts of a curing agent (adipohydrazide) 3 parts of a curing accelerator (amine adduct PN-23, manufactured by Ajinomoto Inc.), 200 parts of an inorganic filler (fused silica, Fuselex RD8, manufactured by Tatsumori Inc.) 1.5 parts of a mold releasing agent (Hoechist wax, manufactured by Hoechist Japan, Inc.) and 1.5 parts of a coupling agent (NUC silane coupling agent A-187, manufactured by Nihon Uniker Inc.) was prepared. This composition had a viscosity of about 285,000 Cp at 25 °C and 27,000 at 50 °C and a gellation time of 12,600 seconds at 80 °C and 57 seconds at 150 °C. The epoxy resin composition was charged in an injection cylinder maintained at 40 °C and injected at an injection pressure of 30 $kg/cm^2$ through a nozzle into a mold cavity maintained at 160 °C. The injection molding was able to be performed with that injection pressure even after the charge had been allowed to stand for 24 hours at 45 °C. The molded body was released from the mold 40 seconds after the injection and subjected to after-hardening at 170 °C for 2 hours. The molded body had a blending strength of 12.8 $kg/mm^2$, a bending elasticity of 1006 $kg/mm^2$, a glass transition point of 127 °C and a thermal expansion coefficient of $3.30 \times 10^{-5}$/°C.

Example 6

An epoxy composition was prepared in the same manner as that of Example 5 except that a glycidyl ether of bisphenol A (AER-331K, manufactured by Asahikasei Inc.) was used as the epoxy resin, that the curing agent and curing acceleratcr were used in amount of 16 parts and 5 parts, respectively and that 100 parts of crystalline silica (Crystallite A-1, manufactured by Tatsumori Inc.) were used as the filler. This composition had a viscosity of about 255,000 Cp at 25 °C and 24,000 at 50 °C and a gellation time of 34,000 seconds at 80 °C and 51 seconds at 150 °C. The epoxy resin composition was charged in an

injection cylinder maintained at 30 °C and injected at an injection pressure of 25 kg/cm$^2$ through a nozzle into a mold cavity maintained at 150 °C. The injection molding was able to be performed with that injection pressure even after the charge had been allowed to stand for more than 10 days. The molded body was released from the mold 60 seconds after the injection and subjected to after-hardening at 170 °C for 2 hours. The molded body had a bending strength of 9.8 kg/mm$^2$, a bending elasticity of 530 kg/mm$^2$, a glass transition point of 137 °C and a thermal expansion coefficient of 4.96x10$^{-5}$/°C.

Example 7

An epoxy composition was prepared in the same manner as that of Example 5 except that the mixed epoxy resin Epototo ZX-1059 as used in Example 1 was used as the epoxy resin, that 6 parts of dicyanodiamide (DICY-200, manufactured by Nihon Carbide Inc.) were used as the curing agent and that 5 parts of 3,(3,4-dichlorophenyl)-1,1-dimethylurea were used as the curing accelerator. This composition had a viscosity of about 105,000 Cp at 25 °C and 11,000 at 50 °C and a gellation time of 7,500 seconds at 80 °C and 90 seconds at 150 °C. The epoxy resin composition was charged in an injection cylinder maintained at 40 °C and injected at an injection pressure of 25 kg/cm$^2$ through a nozzle into a mold cavity maintained at 165 °C. The injection molding was able to be performed with that injection pressure even after the charge had been allowed to stand for 4 days. The molded body was released from the mold 60 seconds after the injection and subjected to after-hardening at 170 °C for 2 hours. The molded body had a bending strength of 11.5 kg/mm$^2$, a bending elasticity of 1027 kg/mm$^2$, a glass transition point of 138 °C and a thermal expansion coefficient of 3.34x10$^{-5}$/°C.

Example 8

Example 5 was repeated in the same manner as described except that 50 parts of spherical silica (Fuselex TB44, manufactured by Tatsumori Inc.) were additionally incorporated into the composition as the filler. This composition had a viscosity of about 2,100,000 Cp at 25 °C and 198,000 at 50 °C and a gellation time of 9,400 seconds at 80 °C and 85 seconds at 150 °C. The molded body had a bending strength of 13.6 g kg/mm$^2$, a bending elasticity of 1223 kg/mm$^2$, a glass transition point of 134 °C and a thermal expansion coefficient of 2.66x10$^{-5}$/°C.

Comparative Example 1

A liquid epoxy resin composition containing 100 parts of a mixture of glycidyl ethers of bisphenol A and bisphenol F (Epototo ZX-1059, manufactured by Toto Kasei Inc.), 80 parts of a curing agent (acid anhydride MT-500 manufactured by Shinnihon Rika Inc.) 2.5 parts of a curing accelerator (2,4,6-tris-(dimethylaminomethyl)phenol), 200 parts of an inorganic filler (crystalline silica, Crystalite C, manufactured by Tatsumori Inc) and 1.5 parts of a mold releasing agent (carbana wax, manufactured by Nikko Fine Products, Inc.) was prepared. This composition had a gellation time of 2,100 seconds at 80 °C and 77 seconds at 150 °C. The epoxy resin composition gelled when allowed to stand at 25 °C for 2 days.

Comparative Example 2

Comparative Example 1 was repeated in the same manner as described except that 25 parts of xylylene diamine (Shoamine N, manufactured by Showa Denko Inc.) were used as the curing agent. The resulting resin composition had a gellation time of 900 seconds at 80 °C and 50 seconds at 150 °C. The epoxy resin composition gelled when allowed to stand at 25 °C for 1 hour.

**Claims**

1. A molding method comprising the steps of:
(a) providing an epoxy resin composition having a gellation time at 80 °C ($T_{80}$) of at least 60 minutes and a gellation time at 150 °C ($T_{150}$) of not greater than $0.02T_{80}$;

(b) charging the epoxy resin composition in a cylinder provided with an injection nozzle while maintaining the charged epoxy resin composition at a temperture from room temperature to 70 °C,
(c) injecting the epoxy resin composition contained in said cylinder into a mold cavity through said nozzle while maintaining said mold at a temperature of 100 °C or more; and
(d) curing the epoxy resin within said mold cavity.

2. A molding method according to claim 1, further comprising placing an electric part within said mold cavity before step (c) so that the electric part is encapsulated in the cured epoxy resin.

3. A molding method according to claim 1, wherein said epoxy resin composition includes an epoxy resin and a curing agent.

4. A molding method according to claim 3, wherein said curing agent is a nitrogen-containing curing agent.

5. A molding method according to claim 4, wherein said epoxy resin is a liquid, epoxy resin having a viscosity at 25 °C of 20,000 Cp or less.

6. A molding method according to claim 4, wherein said nitrogen-containing curing agent is selected from acid hydrazides and dicyanodiamide.

7. A molding method according to claim 6, wherein said nitrogen-containing curing agent is used in an amount of 0.03- 0.25 mole per one equivalent of the epoxy group of said epoxy resin.

8. A molding method according to claim 3, wherein said epoxy resin composition further includes a curing accelerator.

9. A molding method according to claim 8, wherein said curing accelerator is selected from 3-substituted-1,1-dimethylureas, solid solutions of 1,8-diaza-bicyclo(5,4,0)undecene-7 and a phenol novolak, and amine adducts.

10. A molding method according to claim 8, wherein said curing accelerator is used in an amount of 1-30 % based on the weight of said epoxy resin.

11. A molding method according to claim 8, wherein said curing agent is an acid dihydrazide and said curing accelerator is an amine adduct.

12. A molding method according to claim 11, wherein said acid dihydrazide is adipodihydrazide.

13. A molding method according to claim 3, wherein said epoxy resin composition further includes an inorganic filler in an amount of 30-80 % based on the weight of said epoxy resin composition.

14. A molding method according to claim 3, wherein said epoxy resin composition further includes a mold release agent.

15. A molding method according to claim 3, wherein said epoxy resin composition further includes a silane coupling agent.

16. A molding method according to claim 13, wherein said inorganic filler is crystalline silica and/or fused silica.

17. A molding method according to claim 13, wherein said inorganic filler has been treated with a silane compound.

18. A molding method according to claim 3, wherein said epoxy resin is selected from glycidyl ethers of bisphenol A, bisphenol F and bisphenol AD and mixtures thereof.